# EUROPEAN PATENT APPLICATION

(11) **EP 2 377 713 A1**
(43) Date of publication of application: **19.10.2011**
(21) Application number: 11162352.6
(22) Date of filing: 14.04.2011
(51) Int. Cl.: B60L 15/20, B62M 6/45

(54) **Electrically assisted bicycle**

(30) Priority: 19.04.2010 JP 2010096209; 28.02.2011 JP 2011042415
(71) Applicant: SANYO ELECTRIC CO., LTD., Moriguchi-shi, Osaka 570 (JP); Sanyo Consumer Electronics Co., Ltd., Tottori-shi Tottori 680-8634 (JP)
(72) Inventor: Shimazu, Masahiro, Tottori 680-8634 (JP)
(74) Representative: Witte, Weller & Partner

(57) **Abstract**

In an inventive electrically assisted bicycle (10), an optimum assist drive force is applied to a front driven wheel (13) according to a traveling environment. The electrically assisted bicycle (10) has a traveling environment load defining table (310) in which plural types of traveling environment loads are predefined by employing a bicycle traveling speed and a torque applied to a crank as variables. A traveling environment load level is detected by fitting a torque detected by a torque detecting unit (43) and a traveling speed detected by a traveling speed detecting unit (42) in the table (310). A control unit (31) sets the ratio (assist ratio) of an assist drive force to be generated by an electric drive system to a drive force generated by a human power drive system based on the load thus detected, and causes the electric drive system to generate the assist drive force at the ratio thus set.

## Description

### TECHNICAL FIELD

The present invention relates to an improvement in an electrically assisted bicycle having a human power drive system which transmits a pedaling force applied to pedals, and an electric drive system which transmits an assist power generated by an electric unit.

### BACKGROUND ART

In recent years, electrically assisted bicycles are known, in which an assist power generated by an electric unit such as an electric motor and transmitted in an electric drive system is applied to a human power drive system which generates a pedaling force by permitting a rider to step pedals, thereby achieving drive assist to reduce a force required for the rider's pedaling.

An electrically assisted bicycle of this type is proposed, which is adapted to travel at a moderate speed suitable for the bicycle by reducing the assist power during high speed traveling (see, for example, Patent Document 1).

Patent Document 1: JP-A-HEI6(1994)-107266

In the electrically assisted bicycle disclosed in Patent Document 1, an assist ratio is calculated based on the rider's pedaling force applied to the pedals, and controlled so that the assist power is relatively increased as the traveling speed is reduced from a higher speed range to an intermediate speed range and to a lower speed range, i.e., the assist power is applied according to the traveling speed. Therefore, if the pedaling force and the traveling speed are kept constant, the same assist power is applied. That is, the same assist power is applied when the bicycle travels on a flat road or in an environment which exerts a relatively small load on the rider and when the bicycle travels uphill, with heavy burden, or in an environment which exerts a relatively great load on the rider.

In the electrically assisted bicycle disclosed in Patent Document 1, the assist ratio is calculated based on the pedaling force, and controlled according to the traveling speed. That is, the assist ratio is determined without consideration of the level of the load exerted by the traveling environment. Therefore, the assist power is applied based on the same assist ratio when the bicycle travels in the environment exerting the relatively small load on the rider and when the bicycle travels in the environment exerting the relatively great load on the rider. This disadvantageously makes it impossible to properly apply the assist power when the level of the traveling environment load changes.

### SUMMARY OF THE INVENTION

It is an object of the present invention to provide an electrically assisted bicycle which is capable of properly applying an assist power according to a traveling environment.

According to one aspect of the present invention, there is provided an electrically assisted bicycle, which includes: a human power drive system which includes pedals and a crank, the crank being rotatable by humanly applying a pedaling force to the pedals to generate a drive force; a battery unit which accumulates electric power; an electric drive system which generates an assist drive force by utilizing electric power outputted from the battery unit; a torque detecting unit which detects a torque applied to the crank by the pedaling force applied to the pedals; a traveling speed detecting unit which detects a bicycle traveling speed; a traveling environment load defining table in which plural types of traveling environment loads are predefined by employing the bicycle traveling speed and the torque applied to the crank as variables; traveling environment load detecting means which fits the torque detected by the torque detecting unit and the traveling speed detected by the traveling speed detecting unit in the table to detect a traveling environment load level; assist ratio setting means which sets an assist ratio indicating a ratio of an assist drive force to be generated by the electric drive system to a drive force generated by the human power drive system based on the load level detected by the traveling environment load detecting means; and a control unit which performs a control operation to cause the electric drive system to generate the assist drive force at the assist ratio set by the assist ratio setting means.

In the inventive electrically assisted bicycle, wherein the control unit judges, based on the torque detected by the torque detecting unit every half turn of the crank, whether the electric drive system operates at the assist ratio set by the assist ratio setting means, and increases stepwise a ratio of an assist drive force currently generated by the electric drive system so that the ratio of the currently generated assist drive force equals to the assist ratio set by the assist ratio setting means.

In the inventive electrically assisted bicycle, the electric drive system preferably includes a motor provided in a hub of a front wheel of the bicycle for driving the front wheel.

In the inventive electrically assisted bicycle, the control unit increases the ratio of the assist drive force currently generated by the electric drive system, irrespective of the assist ratio set by the assist ratio setting means, when the bicycle starts traveling from a stopped state.

In the present invention, the traveling environment loads are preferably each predefined according to a bicycle transmission stage as well as the bicycle traveling speed and the torque applied to the crank in the traveling environment load defining table.

The inventive electrically assisted bicycle further includes a speed changer which changes a ratio of a rotation number of the crank to a rotation number of a rear wheel when the pedaling force applied to the pedals is transmitted to the rear wheel, and transmission stage determining means which determines a transmission stage of the speed changer, wherein the traveling environment load detecting means detects the traveling environment load level according to a determination result made by the transmission stage determining means based on the traveling environment load defining table.

According to the present invention, the electrically assisted bicycle is friendly to the rider, because the assist drive force can be properly applied according to the traveling environment in which the bicycle travels, for example, according to the inclination angle of a slope, the weight of burden mounted on the bicycle, an against-wind traveling state, and the like.

The electrically assisted bicycle is capable of smoothly change the assist drive force according to the driving state of the bicycle, because the assist ratio is changed every half turn of the crank.

In the inventive electrically assisted bicycle, the electric motor which generates the assist drive force is provided on the front wheel. Therefore, the inventive electrically assisted bicycle has a double driving system in which the rear wheel is humanly driven and the front wheel is electrically driven for drive assist.

The inventive electrically assisted bicycle can be smoothly started with a smaller pedaling force.

Further, the inventive electrically assisted bicycle advantageously utilizes the speed change function of the speed changer, ensuring comfortable driving with a moderate pedaling force.

### BRIEF DESCRIPTION OF THE DRAWINGS

Fig. 1 is a side view of an electrically assisted bicycle according to one embodiment of the present invention.

Fig. 2 is a block diagram showing an exemplary arrangement of an electric unit and a control circuit system of the electrically assisted bicycle 10 according to the embodiment of the present invention.

Fig. 3 is a plan view showing a specific example of the unit.

Fig. 4 is a flow chart showing a control operation to be performed by a controller.

Fig. 5 is a graph showing an exemplary uphill traveling environment load defining data table.

### EMBODIMENTS OF THE INVENTION

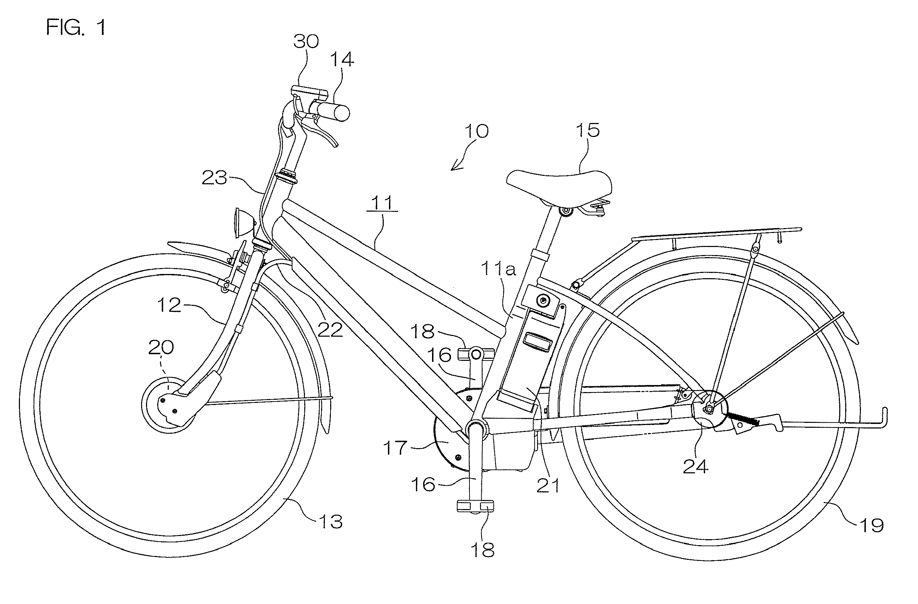

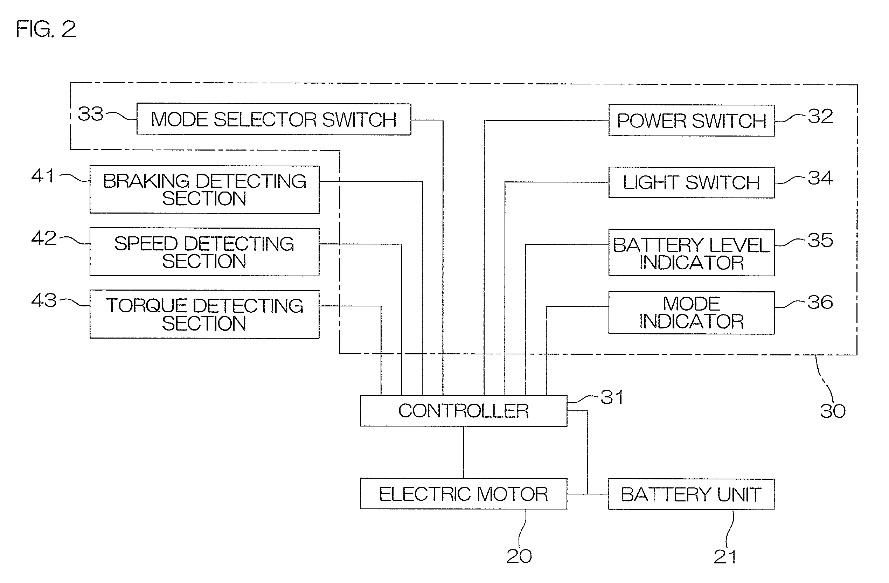

Fig. 1 is a side view of an electrically assisted bicycle according to one embodiment of the present invention, and Fig. 2 is a block diagram showing an arrangement of an electric unit and a control circuit system of the electrically assisted bicycle.

Referring to Fig. 1, the electrically assisted bicycle 10 has a basic bicycle construction such as to include a frame 11, a front fork 12 provided on a front side of the frame 11, a front wheel 13 attached to the front fork 12, a handlebar 14 for operating the front wheel 13 via the front fork 12, a saddle 15 attached to the frame 11, a crank 16 and a gear unit 17 provided on the frame 11, pedals 18 attached to the crank 16, and a rear wheel 19 attached to a rear portion of the frame 11.

The electrically assisted bicycle 10 includes an electric motor 20 provided in a hub of the front wheel 13. Further, the electric assisted bicycle 10 includes a battery unit 21 detachably provided on a saddle support 11a of the frame 11. A switch unit 30 serving as a display/operation control section is attached to the handlebar 14. The electric motor 20, the battery unit 21 and the switch unit 30 are electrically connected to each other via connection cords 22, 23.

Referring to Fig. 2, the electric unit and the control circuit system will be described.

The electric motor 20 provided in the hub of the front wheel 13 rotates the front wheel 13 by electric power supplied from the battery unit 21 to generate a drive force. When the rotation speed of the front wheel 13 is faster than the rotation speed of the electric motor 20 on a downhill slope or the like, the electric motor 20 charges the battery unit 21 through regenerative braking.

The electrically assisted bicycle 10 includes a controller 31 connected to the electric motor 20 and the battery unit 21. The controller 31 includes, for example, an electronic circuit such as a single-chip microcomputer, and performs a control operation to be described later. The controller 31 further includes a memory, which preliminarily stores a data table required for the control operation as will be described later. The switch unit 30 is connected to the controller 31, and a power switch 32, a mode selector switch 33, a light switch 34, a battery level indicator 35 and a mode indicator 36 are provided in the switch unit 30. The controller 31 is disposed adjacent the gear unit 17, but may be disposed in the switch unit 30, in the battery unit 21 or adjacent the battery unit 21, or at any other position.

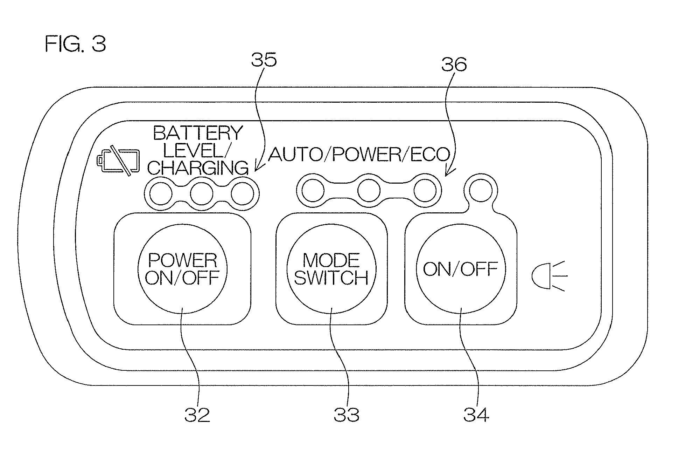

Fig. 3 is a plan view showing an example of the switch unit 30.

When the power switch 32 is turned on, the electric motor 20 is ready for generation of an assist drive force. The mode selector switch 33 is operated by a rider of the bicycle for selecting an operation mode from an auto mode, a power mode and an eco-charge mode. In the auto mode, the electric motor 20 is caused to generate an electric current through the regenerative braking to charge the battery unit 21 when the bicycle spontaneously travels, for example, when the traveling state of the bicycle is changed from an ordinary traveling state to a downhill traveling state. In the eco-charge mode, the battery unit 21 is charged through the regenerative braking when the bicycle travels in a traveling environment which exerts a relatively small load on the rider, for example, when the bicycle travels on a flat road with a smaller human drive force than in the ordinary traveling state, travels on a gentle downhill slope or travels with wind. In the power mode, the assist drive force is generated at a higher assist ratio than in the auto mode.

Referring to Fig. 2, a braking detecting section 41, a speed detecting section 42 and a torque detecting section 43 are also connected to the controller 31. The braking detecting section 41 includes a sensor provided in a braking system such as a brake lever or a brake pad, and detects whether or not braking occurs. The speed detecting section 42 detects the traveling speed of the electrically assisted bicycle 10, for example, by detecting the rotation speed of the front wheel 13 or the rear wheel 19. The torque detecting section 43 is provided, for example, in association with the crank 16 and the gear unit 17, and detects a torque applied to gears of the gear unit 17 from the pedals 18 via the crank 16. That is, the torque detecting section 43 detects a torque based on a rider's pedaling force.

The braking detecting section 41, the speed detecting section 42 and the torque detecting section 43 are known mechanisms, and may each have any of various conceivable constructions. Therefore, these mechanisms will not be herein described in detail.

Referring to Fig. 1, a speed changer not shown is provided in a hub 24 positioned at the center of the rear wheel 19. The speed changer is switched among transmission stages by a transmission lever (not shown) provided in the handle bar 14. Further, the controller 31 automatically detects the transmission stage of the speed changer by detecting a pedaling cycle of the pedals 18 based on an output of the torque detecting section 43, and calculating the rotation number of the electric motor 20 in the pedaling cycle of the pedals 18 based on an output of the speed detecting section 42.

The controller 31 may be configured to fetch a signal from the transmission lever for the detection of the transmission stage.

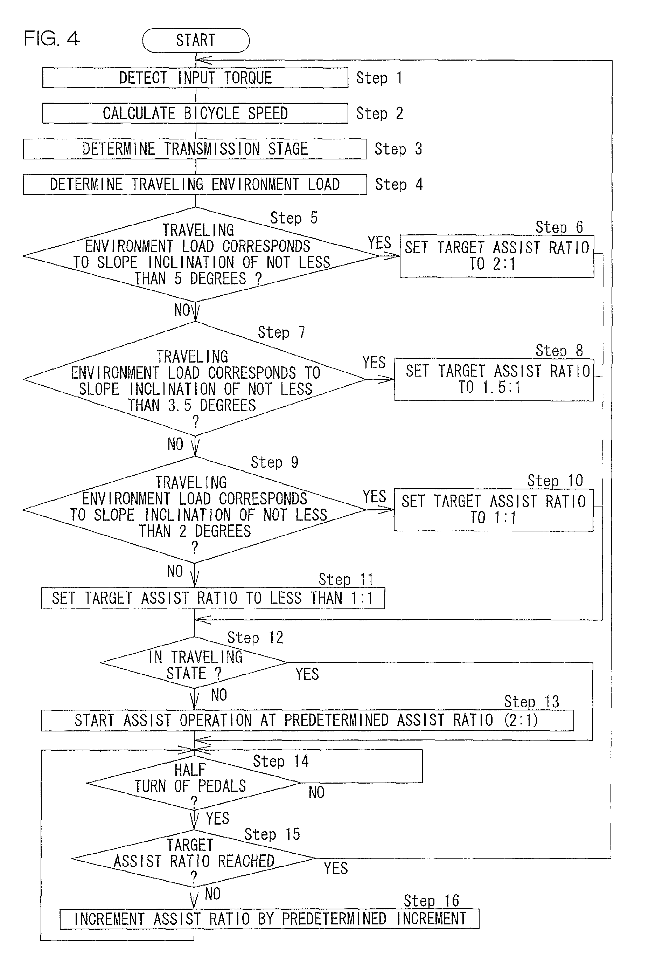

Fig. 4 is a flow chart showing a control operation to be performed by the controller 31. This flow chart is directed to a control operation for determining the level of a traveling environment load of the electrically assisted bicycle 10 according to this embodiment.

With reference to the flow chart of Fig. 4, the control operation to be performed by the controller 31 will be described.

After the rider rides the electrically assisted bicycle 10 and turns on the power switch 32, the rider steps the pedals 18. Then, the torque applied to the gear unit 17 via the crank 16 is detected by the torque detecting section 43 provided in the gear unit 17, and applied to the controller 31. That is, an input torque is detected (Step 1). Further, the traveling speed of the bicycle 10 is detected by the speed detecting section 42, and applied to the controller 31 (Step 2). In this embodiment, the speed detecting section 42 is configured to calculate the traveling speed of the bicycle 10 based on the rotation speed of the electric motor 20. The controller 31 determines the transmission stage of the speed changer 24 based on the input torque from the torque detecting section 43 and the traveling speed from the speed detecting section 42 (Step 3).

Then, the current level of the traveling environment load is determined from the data table stored in the memory (preliminarily set in the memory) based on the input torque, the traveling speed and the transmission stage. That is, the controller 31 determines which of a flat road traveling state, a gentle uphill traveling state, a steep uphill traveling state and a downhill traveling state, for example, the current traveling environment load level corresponds to (Step 4). Exemplary traveling states for the traveling environment load include an against-wind traveling state and a burdened traveling state in addition to the traveling states based on the inclination angles of traveling roads. In the data table, torque values are predefined with respect to the transmission stage of the speed changer and the traveling speed of the bicycle according to the traveling environment load. The traveling environment load level is determined by comparing the torque detected by the torque detecting section with the torque values predefined in the data table.

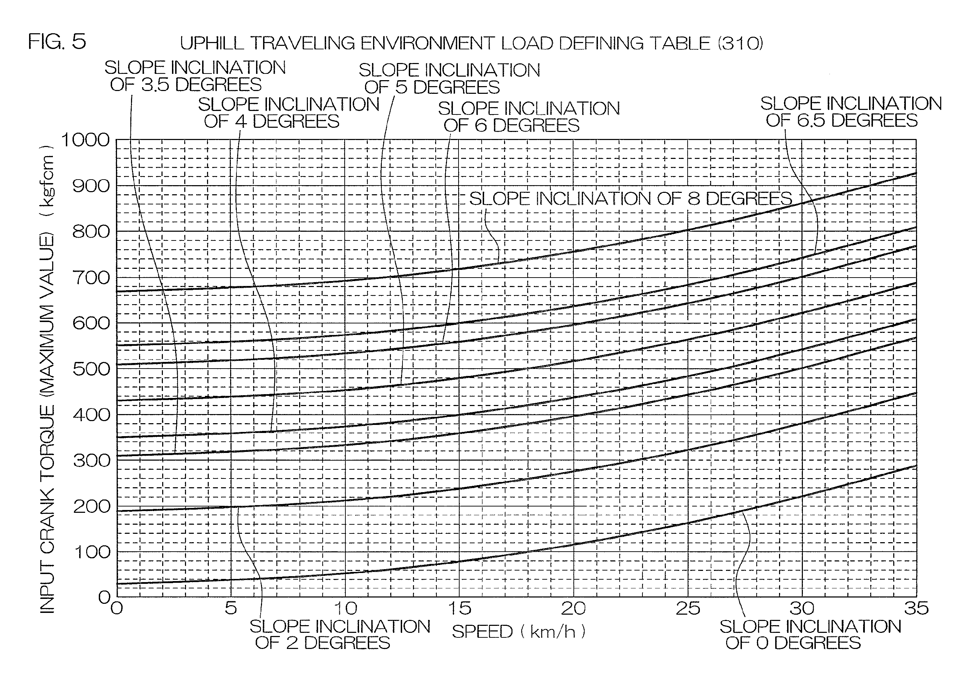

In Fig. 5, an example of the data table 310 is shown, which is predefined for an uphill traveling environment load.

In Fig. 5, the traveling speed of the bicycle is plotted as abscissa, and the input crank torque is plotted as ordinate. Referring to Fig. 5, it is assumed that the bicycle travels at a traveling speed of 15 km/h. Where the bicycle travels on a flat road, the input crank torque is 80 kgfcm. Where the bicycle travels on an uphill road having an inclination angle of 2 degrees, the input crank torque is increased to 240 kgfcm. Where the bicycle travels on an uphill road having an inclination angle of 4 degrees, the input crank torque is further increased to 400 kgfcm.

Even if the traveling speed of the bicycle is constant, the value of the torque to be applied to the crank significantly varies depending on the traveling environment load, i.e., the inclination angle of the road on which the bicycle travels.

In this embodiment, input crank torque values for the uphill traveling are preliminarily stored in the data table, and the traveling speed and the input crank torque are fitted in the data table to determine the traveling environment load level.

Referring to Fig. 5, the transmission stage of the speed changer is not described, but the determination of the traveling environment load level is preferably further based on the transmission stage.

Referring to Fig. 4, the controller 31 determines the traveling environment load level in Step 4, and judges whether the traveling environment load level corresponds to a slope inclination of not less than 5 degrees (Step 5). If the traveling environment load level corresponds to a slope inclination of not less than 5 degrees, a target assist ratio is set to, for example, 2:1 (Step 6).

If the controller 31 judges in Step 5 that the traveling environment load level does not correspond to a slope inclination of not less than 5 degrees, the controller 31 further judges whether the traveling environment load level corresponds to a slope inclination of not less than 3.5 degrees (Step 7). If the judgment in Step 7 is affirmative, the target assist ratio is set to, for example, 1.5:1 (Step 8).

If the judgment in Step 7 is negative, the controller 31 further judges whether the traveling environment load level corresponds to a slope inclination of not less than 2 degrees (Step 9). If the traveling environment load level corresponds to a slope inclination of not less than 2 degrees, the target assist ratio is set to, for example, 1:1 (Step 10).

Thus, the target assist ratio is set to a higher level, an intermediate level or a lower level according to the traveling environment load level (i.e., based on which of a greater slope inclination range, an intermediate slop inclination range and a smaller slope inclination range the traveling environment load level corresponds to).

In Step 9, if the traveling environment load level does not correspond to a slope inclination of not less than 2 degrees, the target assist ratio is set to a minimum ratio of less than 1:1 (Step 11).

Subsequently, the controller 31 judges, based on the output of the speed detecting section 42, whether the bicycle is in the traveling state (Step 12). If the bicycle is not in the traveling state, the controller 31 starts an assist operation at a predetermined pedaling start assist ratio (e.g., an assist ratio of 2:1) (Step 13). That is, a greater drive force is required for moving the bicycle 10 from a stopped state at the start of the pedaling. Therefore, the controller 31 causes the electric motor 20 to generate a greater assist drive force at the start of the pedaling.

During the traveling, the controller 31 judges whether a current assist ratio (the ratio of an assist drive force currently generated) reaches the target assist ratio (Step 15) in each pedaling cycle or every half turn of the pedals 18 (every half turn of the crank 16) (Step 14). If the target assist ratio is not reached, the current assist ratio is incremented by a predetermined increment (Step 16). The increment for the current assist ratio is determined so as not to steeply increase the current assist ratio. The current assist ratio is gradually incremented (Step 16) every half turn of the pedals or in each pedaling cycle (Step 14), so that the assist drive force can be safely and smoothly increased.

Thus, the current assist ratio is incremented by the predetermined increment in Step 16. The incrementation of the current assist ratio is continued until the target assist ratio is reached in Step 15. After the target assist ratio is reached, the routine returns to Step 1 to cause the bicycle to continuously travel at the target assist ratio.

If the traveling environment load is changed from the higher level to the lower level and the change in the traveling environment load continues for a predetermined period (e.g., about 1 second), the target assist ratio is set to a lower level based on the torque detected by the torque detecting section 43. Then, the assist ratio is decremented from the current assist ratio to the target assist ratio thus newly set (lower target assist ratio).

As described with reference to Fig. 1, the inventive electrically assisted bicycle 10 is configured to apply the assist drive force to the front wheel 13, but is not limited to this configuration. The electrically assisted bicycle 10 may be configured to apply the assist drive force to the rear wheel 19. Although the speed changer is provided on the rear wheel 19, the bicycle may include no speed changer. Where the speed changer is obviated, the traveling environment load level is determined without consideration of the transmission stage.

### INDUSTRIAL APPLICABILITY

The present invention is applicable to electrically assisted bicycles which are adapted to apply the assist drive force according to the traveling environment load such as based on the inclination angle of the slope, the weight of the mounted burden and/or the against-wind traveling state.

## Claims

1. An electrically assisted bicycle (10) comprising:
a human power drive system which includes pedals (18) and a crank (16), the crank (16) being rotatable by humanly applying a pedaling force to the pedals (18) to generate a drive force;
a battery unit (21) which accumulates electric power;
an electric drive system (20) which generates an assist drive force by utilizing electric power outputted from the battery unit (21);
a torque detecting unit (43) which detects a torque applied to the crank (16) by the pedaling force applied to the pedals (18);
a traveling speed detecting unit (42) which detects a bicycle traveling speed;
a traveling environment load defining table (310) in which plural types of traveling environment loads are predefined by employing the bicycle traveling speed and the torque applied to the crank as variables;
traveling environment load detecting means (31) which fits the torque detected by the torque detecting unit (43) and the traveling speed detected by the traveling speed detecting unit (42) in the table (310) to detect a traveling environment load level;
assist ratio setting means (31) which sets an assist ratio indicating a ratio of an assist drive force to be generated by the electric drive system to a drive force generated by the human power drive system based on the load level detected by the traveling environment load detecting means; and
a control unit (31) which performs a control operation to cause the electric drive system to generate the assist drive force at the {assist} ratio set by the assist ratio setting means.

2. The electrically assisted bicycle according to claim 1, wherein the control unit (31) judges, based on the torque detected by the torque detecting unit (43) every half turn of the crank (16), whether the electric drive system operates at the assist ratio set by the assist ratio setting means, and increases stepwise a ratio of an assist drive force currently generated by the electric drive system so that the ratio of the currently generated assist drive force equals to the assist ratio set by the assist ratio setting means.

3. The electrically assisted bicycle according to claim 1 or 2, wherein the electric drive system includes an electric motor provided in a hub of a front wheel (13) of the bicycle for driving the front wheel.

4. The electrically assisted bicycle according to any of claims 1 to 3, wherein the control unit (31) increases the ratio of the assist drive force currently generated by the electric drive system, irrespective of the assist ratio set by the assist ratio setting means, when the bicycle starts traveling from a stopped state.

5. The electrically assisted bicycle according to claim 1, wherein the traveling environment loads are each predefined according to a bicycle transmission stage as well as the bicycle traveling speed and the torque applied to the crank in the traveling environment load defining table (310).

6. The electrically assisted bicycle according to claim 5 further comprising:
a speed changer which changes a ratio of a rotation number of the crank (16) to a rotation number of a rear wheel when the pedaling force applied to the pedals (18) is transmitted to the rear wheel; and
transmission stage determining means which determines a transmission stage of the speed changer;
wherein the traveling environment load detecting means (31) detects the traveling environment load level according to a determination result made by the transmission stage determining means based on the traveling environment load defining table.
